# EUROPEAN PATENT APPLICATION

(11) **EP 2 517 908 A1**
(43) Date of publication of application: **31.10.2012**
(21) Application number: 10839335.6
(22) Date of filing: 20.12.2010
(51) Int. Cl.: B60H 1/08, B60H 1/22

(54) **AIR CONDITIONER FOR VEHICLE**

(30) Priority: 21.12.2009 JP 2009289283
(71) Applicant: Calsonic Kansei Corporation, Saitama-shi Saitama 331-8501 (JP)
(72) Inventor: NAKAJO, Kazuo, Saitama-shi Saitama 331-8501 (JP); TAKEI, Toshihiro, Saitama-shi Saitama 331-8501 (JP); SOMA, Hiroshi, Saitama-shi Saitama 331-8501 (JP)
(74) Representative: Ilgart, Jean-Christophe
(86) International application number: PCT/JP2010/072860
(87) International publication number: WO 2011/078105

(57) **Abstract**

Provided is an air conditioner for a vehicle which can prevent the controls over cooling cycle and heating cycle from interfering with each other and thereby prevent hunting between the cooling and heating cycles even when a compressor is operated to perform the heating cycle in an overlapping temperature range where air cooling and air heating are both required. An air conditioner (4) for a vehicle includes a refrigerant circulation circuit (9b) for air heating to circulate a refrigerant, and a control unit (29) to selectively perform a normal air conditioning mode in which a normal cooling operation is feasible by circulating the refrigerant through a refrigerant circulation circuit (9a) for air cooling and an auxiliary heating mode in which an auxiliary heating operation is performed by circulating the refrigerant through the refrigerant circulating circuit (9b) for air heating.

## Description

### TECHNICAL FIELD

The present invention relates to an air conditioner for a vehicle to heat the air in a vehicle interior using the heat from a cooling water.

### BACKGROUND ART

A conventional vehicle air conditioner is generally comprised of an air heating unit using the heat from an engine cooling water and an air cooling unit using a refrigeration cycle.

In the air heating unit, a high-temperature engine cooling water having absorbed heat from the engine is circulated inside a heater core in an instrument panel to heat the air by the heat from the heater core and blow the heated air from an outlet of the instrument panel for heating the air in the vehicle interior.

However, since the air heating unit uses the engine cooling water, the temperature of the cooling water remains low for a while after an engine start so that the air temperature blown to the vehicle interior is also low.

Thus, it may take a certain length of time for the air temperature of the vehicle interior to reach a temperature at which occupants can feel comfortable.

In view of solving the above problem, Patent Document 1 discloses a known air heating technique, for example.

According to the invention recited in Patent Document 1, the engine cooling water is heated with a heat pump and supplied to the heater core until the engine cooling water becomes sufficiently high in temperature for use in heating the air. Thereby, warm air can be introduced into the vehicle interior even immediately after the engine start.

Meanwhile, in the above air cooling unit the high pressure refrigerant compressed in the compressor is inflated in an evaporator in the instrument panel to cool down the air around the evaporator by endothermic reaction of the inflated refrigerant. Thereby, the cooled air can be introduced from the outlet of the instrument panel into the vehicle interior to cool there.

Thus, the air cooling unit of the conventional vehicle air conditioner generally cools the air in the vehicle interior by the refrigeration cycle of refrigerant.

Moreover, an airconditioning system for a vehicle is known, which includes air cooling and air heating cycles and shares a refrigerant passage for the air cooling and heating cycles.

### Prior Art Document

### Patent Document

Patent Document 1: Japanese Patent Application Publication No. 08-310227
Patent Document 2: Japanese Patent Application Publication No. 2003-80935
Patent Document 3: Japanese Patent Application Publication No. 2005-206014

### SUMMARY OF THE INVENTION

### Problems to be Solved by the Invention

However, the vehicle air conditioner having the air cooling and heating cycles may have a problem that when the compressor is operated for heating air in an overlapping temperature range of both of the air cooling and heating, hunting may occur between the air cooling and heating cycles due to the two opposite cycle controls' interfering with each other.

The present invention aims to provide an air conditioner for a vehicle which can control the air cooling and air heating not to interfere with each other and prevent hunting when the compressor is operated for heating air in an overlapping temperature range of the air cooling and heating.

### Means to Solve the Problem

In view of achieving the above object, an air conditioner for a vehicle according to claim 1 of the present invention comprises a refrigerant circulation circuit for air cooling to circulate a refrigerant through a compressor, a refrigerant condenser provided outside a vehicle interior, a first inflator means, an evaporator for air cooling provided in the vehicle interior, and an accumulator for vapor-liquid separation in this order; a cooling water circulation circuit for air heating to circulate a cooling water between a cooling water passage in a heat generator of a vehicle drive unit and a heater core in the vehicle interior; a three-way solenoid valve provided between the compressor and the condenser; and a refrigerant circulation circuit for air heating to circulate a refrigerant through the compressor, the three-way solenoid valve, a heat exchanger means for heating a cooling water, an outside heat exchanger unit including a second inflator means and the accumulator in this order, the heat exchanger means for heating a cooling water comprising a heat exchanger for a cooling water provided in a middle of the cooling water circulation circuit for air heating, and an outside heat exchanger provided in a middle of the refrigerant circulation circuit for air heating to transfer heat with the heat exchanger for a cooling water, and a control means to selectively execute a normal airconditioning mode and an auxiliary air heating mode by a switching control of the three-way solenoid valve to switch to either of the refrigerant circulation circuits for air cooling and for air heating, the normal air conditioning mode in which the refrigerant is circulated for normal cooling operation in the refrigerant circulation circuit for air cooling, the auxiliary air heating mode in which the refrigerant is circulated for auxiliary air heating operation in the refrigerant circulation circuit for air heating.

According to claim 2 of the present invention, the air conditioner recited in claim 1 further comprises a water temperature sensor for detecting a temperature of the cooling water, an outside air temperature sensor for detecting an outside temperature of the vehicle interior, and an inside air temperature sensor for detecting an inside temperature of the vehicle interior, wherein the control means is configured to selectively execute the normal airconditioning mode and the auxiliary air heating mode on the basis of a condition of the cooling water temperature, outside air temperature, and inside air temperature.

According to claim 3 of the present invention, the air conditioner recited in claim 1 further comprises an air conditioner switch to start the normal airconditioning mode, and an auxiliary air heating switch to start the auxiliary air heating mode, wherein the control means is configured to switch the normal airconditioning mode to the auxiliary air heating mode when the auxiliary air heating switch is turned on in non- air cooling operation.

According to claim 4 of the present invention, the airconditioner according to claim 2 further comprises an air conditioner switch to start the normal airconditioning mode, and an auxiliary air heating switch to start the auxiliary air heating mode, wherein the control means is configured to control operation of the compressor to perform a normal air cooling when the outside air temperature becomes equal to or over a predetermined air cooling start temperature in a cooling operation of the normal airconditioning mode, and to switch the normal airconditioning mode to the auxiliary air heating mode when the auxiliary air heating switch is turned on in non-air cooling operation and when the outside air temperature is equal to or below a predetermined air heating start temperature and the cooling water temperature becomes equal to or below a predetermined heating start temperature.

According to claim 5 of the present invention, the air conditioner recited in claim 1 can operate in a refrigerant recovery mode in which a remnant refrigerant in the condenser and the evaporator is recovered in the accumulator, in switching to the auxiliary air heating mode after the cooling operation.

According to claim 6 of the present invention, the air conditioner recited in claim 5, further comprises a memory in which an airconditioning control state of the vehicle air conditioner is stored at a stop of the vehicle drive unit.

### Effects of the Invention

According to claim 1 of the present invention as thus configured, the vehicle air conditioner can operate in the auxiliary air heating mode in which refrigerant is circulated through the refrigerant circulation circuit for air heating. Because of this, it can introduce warm air into the vehicle interior even immediately after the start of the vehicle drive unit by supplying to the heater core the cooling water heated by the heat exchanger means for heating cooling water while the vehicle drive unit's cooling water temperature is rising enough for the air heating after the vehicle drive unit starts.

According to claim 2 of the present invention, the vehicle air conditioner can selectively execute the normal airconditioning mode and the auxiliary air heating mode on the basis of the condition of not only the outside and inside air temperatures but also the cooling water temperature. Because of this, it can introduce warm air into the vehicle interior even immediately after the start of the vehicle drive unit by supplying to the heater core the cooling water heated by the heat exchanger means for heating cooling water while the vehicle drive unit's cooling water temperature is rising enough for the air heating after the vehicle drive unit starts.

Further, according to claim 3 of the present invention, the vehicle air conditioner is configured to be switched to the auxiliary air heating mode only when the auxiliary air heating switch is turned on in the normal airconditioning mode but not in the air cooling operation. This can prevent hunting between the air cooling and air heating cycles since the normal airconditioning mode is performed with priority when the compressor is driven for the air heating in an overlapping temperature range in which air heating and air cooling are both required.

According to claim 4 of the present invention, the vehicle air conditioner can selectively execute the normal airconditioning mode and the auxiliary air heating mode on the basis of the condition of not only the outside and inside air temperatures but also the cooling water temperature. Because of this, it can introduce warm air into the vehicle interior even immediately after the start of the vehicle drive unit by supplying to the heater core the cooling water heated by the heat exchanger means for heating cooling water while the vehicle drive unit's cooling water temperature is rising enough for the air heating after the vehicle drive unit starts.

Further, according to claim 5 of the present invention, in switching to the auxiliary air heating mode after the air cooling operation, the vehicle air conditioner can operate in the refrigerant recovery mode in which the remnant refrigerant in the condenser and evaporator is recovered in the accumulator. Therefore, it can efficiently use the refrigerant in the auxiliary air heating and efficiently perform air heating. Besides, the compressor can be free from a shortage of lubricant.

Further, according to claim 6 of the present invention, the vehicle air conditioner includes the memory to store the airconditioning control state of the vehicle air conditioner at stop of the vehicle drive unit. Accordingly, it can determine whether or not to need to operate in the refrigerant recovery mode when the vehicle drive unit is restarted to resume the air heating operation or whether or not to restart the air heating control of the vehicle air conditioner from the beginning or from the stop point of the vehicle drive unit on the basis of the cooling water temperature.

### DESCRIPTION OF THE DRAWINGS

FIG. 1 schematically shows an air conditioner for a vehicle according to the present invention.
FIG. 2 schematically shows an airconditioning unit of the vehicle air conditioner.
FIG. 3 is a block diagram of a control system of the vehicle air conditioner including a control unit.
FIG. 3A is a flowchart for the main control by the control unit of the vehicle air conditioner.
FIG. 3B is a flowchart for the auxiliary air heating mode of the control unit of the vehicle air conditioner.
FIG. 3C is a flowchart for the rotation control over the compressor by the control unit of the vehicle air conditioner.
FIG. 3D is a flowchart for the discharge pressure control over the compressor by the control unit of the vehicle air conditioner.
FIG. 3E is a timing chart for the control by the control unit of the vehicle air conditioner.
FIG. 3F is a timing chart for the control by the control unit of the vehicle air conditioner.

### DESCRIPTION OF EMBODIMENTS

Hereinafter, embodiment of the present invention will be described with reference to the accompanying drawings.

### Embodiment

### (Overall Structure)

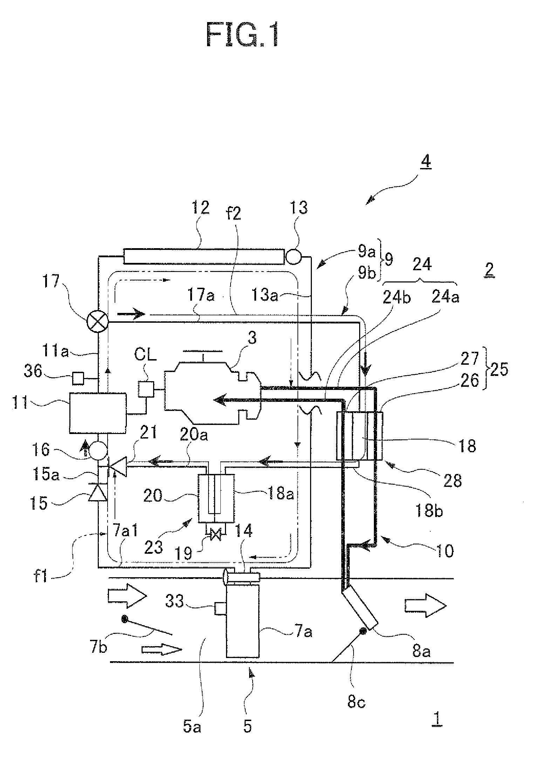

FIG. 1 shows a vehicle (automobile) interior 1, an engine compartment 2, a water cooled engine (vehicle drive unit) 3 provided in the engine compartment 2, and an air conditioner for vehicle 4 according to the present invention.

The engine 3 includes a water jacket (not shown).

The water jacket has an engine cooling water passage (cooling water passage) around a combustion chamber (heat generator) of the engine 3. The cooling water is circulated through this passage to absorb the heat from the combustion chamber of the engine 3 and cool the engine 3.

An instrument panel (not shown) is provided on the front side of the vehicle interior 1. An airconditioning unit 5 constituting the vehicle air conditioner 4 is provided in the instrument panel.

### 〈structure of Airconditioning Unit 5〉

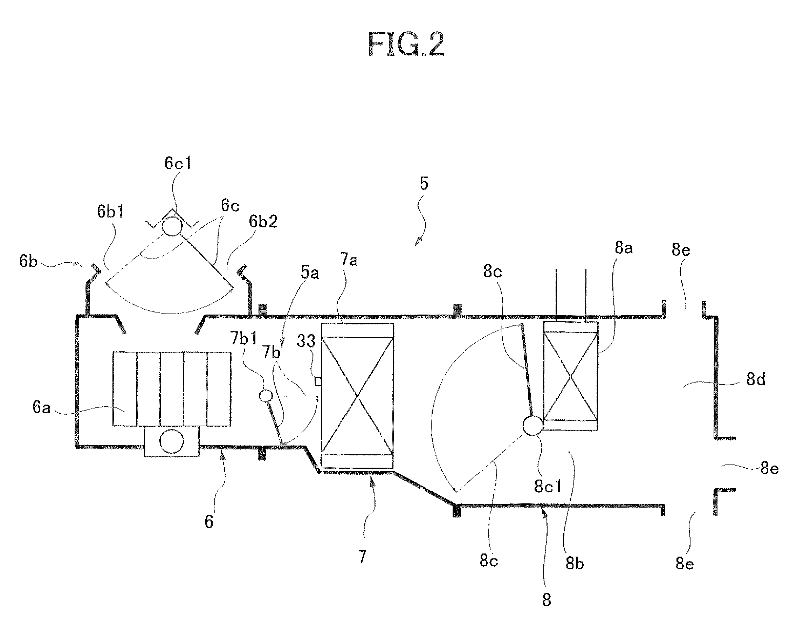

In FIG. 2 the airconditioning unit 5 includes a blower unit 6, a cooler unit 7, and a heater unit 8.

An air passage 5a is formed in the cooler unit 7 and the heater unit 8 to connect them.

The air from the blower unit 6 is flowed through the air passage 5a.

The blower unit 6 includes a fan (blower) 6a and an intake unit 6b.

The intake unit 6b includes an outside air inlet 6b1, an inside air inlet 6b2, and an intake door 6c.

The intake door 6c is driven by a door drive unit (door drive means) 6c1 comprising a motor to adjust the opening and closing or the opening level of the outside air inlet 6b1 and the inside air inlet 6b2.

The door drive unit 6c1 is controlled to change the stop position of the intake door 6c to adjust the opening level of the outside air inlet 6b1 and the inside air inlet 6b2 or open/close either of them. Thereby, the ratio of air intake amounts from the outside and inside of the vehicle interior can be changed.

The air from the intake unit 6b is transmitted to the cooler unit 7 by the fan (blower) 6a.

The cooler unit 7 includes an evaporator for air cooling 7a and an air passage adjusting door 7b at upstream of the evaporator 7a (or between the fan 6a and the evaporator 7a) .

The air passage adjusting door 7b is driven by a door drive unit (door drive means) 7b1 comprising a motor to open and close the lower part of the air passage 5a.

An air cooling refrigerant can be circulated inside the evaporator 7a. During the refrigerant circulation, the air blown from the fan 6a is cooled down while passing an air passage (not shown) of the evaporator 7a.

The air having passed through the air passage of the evaporator 7a is transmitted to the heater unit 8.

The heater unit 8 includes a heater core for air heating 8a, an air bypass passage 8b, a mix door 8c, and a mix chamber 8d.

The air bypass passage 8b, mix door 8c, and mix chamber 8d are formed at the side (downside in FIG. 2), near upstream side, and at downstream side of the heater core 8a, respectively.

The mix door 8c is driven by a door drive unit (door drive means) 8c1 comprising a motor.

The door drive unit 8c1 is controlled to change the stop position of the mix door 8c to adjust the opening level of the upstream side air passage of the heater core 8a and the bypass passage 8b or open or close either of them. Thereby, the ratio of air amounts flowing through the air passage (not shown) of the heater core 8a and flowing through the air bypass passage 8b can be adjusted.

By closing the upstream of the heater core 8a with the mix door 8c, the air blown from the cooler unit 7 flows through the air bypass passage 8b, bypassing the heater core 8a.

The mix chamber 8d at downstream of the heater core 8a includes a plurality of air outlets 8e which are connected with a defrost grill, a vent grill, and a foot grill of the vehicle interior, respectively.

Inside the heater core 8a the engine cooling water can be circulated. The air from the blower unit 6 is heated while passing the heater core 8a when a high-temperature cooling water is circulated therein.

### structure of Refrigerant Circulation Circuit)

The vehicle air conditioner 4 in FIG. 1 includes a refrigerant circulation circuit 9 and a cooling water circulation circuit 10.

The refrigerant circulation circuit 9 includes refrigerant circulation circuits for air cooling 9a and for air heating 9b.

The refrigerant circulation circuit 9a is for air cooling refrigeration cycle while the refrigerant circulation circuit 9b is for heat pump cycle for heating the cooling water by the refrigerant.

### structure of Refrigerant Circulation Circuit 9a)

The refrigerant circulation circuit 9a includes a compressor 11 for refrigerant, a refrigerant pipe 11 a for air cooling and a condenser 12 for refrigerant.

The refrigerant outlet of the compressor 11 is connected to one end of the air cooling refrigerant pipe 11 a while the other end thereof is connected to the condenser 12 for refrigerant disposed outside the vehicle interior 1.

A power transmitter means (not shown) is provided between the compressor 11 and the engine 3 and includes an electromagnetic clutch CL, a pulley (not shown), a belt (not shown), and else.

The compressor 11 is driven by the rotation of the engine 3 via the power transmitter means.

The structure of the power transmitter means is well known, therefore, a detailed description thereof is omitted.

The refrigerant circulation circuit 9a further includes a liquid tank 13, an air cooling refrigerant pipe 13a, a first inflator means 14, and the evaporator 7a.

The refrigerant inlet of the liquid tank 13 is connected to the refrigerant outlet of the condenser 12 and the refrigerant outlet thereof is connected to one end of the air cooling refrigerant pipe 13a. The other end of the air cooling refrigerant pipe 13a is connected to the refrigerant inlet of the first inflator means 14 and the refrigerant outlet of the first inflator means 14 is connected to the evaporator 7a.

The first inflator means 14 is specifically an expansion valve or an orifice formed by narrowing the passage of the air cooling refrigerant pipe 11a.

The first inflator means 14 is configured to detect the temperature and pressure of the refrigerant from the refrigerant outlet of the evaporator 7a and adjust the amount of liquid refrigerant flowing into the refrigerant inlet of the evaporator in accordance with a load.

That is, the first inflator means 14 adjusts the amount of liquid refrigerant flowing into the refrigerant inlet of the evaporator 7a so as to emit the refrigerant from the refrigerant outlet thereof in an overheated state at predetermined temperature/pressure.

The first inflator means 14 can adopt a known structure, therefore, a detailed description thereof is omitted.

The refrigerant circulation circuit 9a further includes an air cooling refrigerant pipe 7a1, a check valve 15, an air cooling refrigerant pipe 15a, and an accumulator 16 for vapor-liquid separation.

One end of the air cooling refrigerant pipe 7a1 is connected to the refrigerant outlet of the evaporator 7a while the other end thereof is connected to the refrigerant inlet of the check valve 15. The refrigerant outlet of the check valve 15 is connected to one end of the air cooling refrigerant pipe 15a and the other end thereof is connected to the accumulator 16 for vapor-liquid separation. The refrigerant outlet of the accumulator 16 is connected to the refrigerant inlet of the compressor 11.

The refrigerant from the compressor 11 is circulated through the air cooling refrigerant pipe 11a, condenser 12, liquid tank 13, air cooling refrigerant pipe 13a, first inflator means 14, evaporator 7a, air cooling refrigerant pipe 7a1, check valve 15, air cooling refrigerant pipe 15a, and accumulator 16 in this order, and returns to the compressor 11.

Thus, the cycle in which the refrigerant is circulated in the refrigerant circulation circuit 9a is a first refrigeration cycle.

In the first refrigeration cycle gaseous refrigerant is compressed by the compressor 11 to become a high-temperature, high-pressure gaseous refrigerant. Then, it releases its own heat to ambient air in the condenser 12 to be cooled and condensed and turns to high-pressure liquid refrigerant and it is temporarily stored in the liquid tank 13 and inflated to be liquid refrigerant in the first inflator means 14.

The low-pressure liquid refrigerant inflated by the first inflator means 14 is supplied to the evaporator 7a, and vaporized therein to turn to gaseous refrigerant.

Thus, while vaporized in the evaporator 7a, the low-pressure liquid refrigerant absorbs heat from the air in the air passage 5a.

This gaseous refrigerant passes through the air cooling refrigerant pipe 7a1, check valve 15, air cooling refrigerant pipe 15a, and accumulator 16, and returns to the compressor 11.

### 〈Structure of Refrigerant Circulation Circuit 9b〉

The refrigerant circulation circuit 9b includes the compressor 11, a three-way solenoid valve 17, a bypass refrigerant pipe 17a, and an outside heat exchanger 18 for heating cooling water.

The three-way solenoid valve 17 is disposed in the middle of the air cooling refrigerant pipe 11 a and the outside heat exchanger 18 is disposed outside the vehicle interior 1.

A branched refrigerant outlet of the three-way solenoid valve 17 is connected to one end of the bypass refrigerant pipe 17a and the other end thereof is connected to the refrigerant inlet of the outside heat exchanger 18.

The refrigerant circulation circuit 9b further includes a bypass refrigerant pipe 18b, an outside heat exchanger 18a, and a second inflator means 19.

One end of the bypass refrigerant pipe 18b is connected to the refrigerant outlet of the outside heat exchanger 18 while the other end thereof is connected to the outside heat exchanger 18a. The second inflator means 19 is connected to the refrigerant outlet of the outside heat exchanger 18a.

The outside heat exchanger 18a and the second inflator means 19 are provided outside the vehicle interior 1.

The refrigerant circulation circuit 9b further includes an outside heat exchanger 20 for refrigerant vaporization, a bypass refrigerant pipe 20a, a check valve 21, and the accumulator 16.

The outside heat exchanger 20 is supplied with the refrigerant inflated by the second inflator means 19.

One end of the bypass refrigerant pipe 20a is connected to the refrigerant outlet of the outside heat exchanger 20 while the other end thereof is connected to the refrigerant inlet of the check valve 21. The refrigerant outlet of the check valve 21 is connected to the middle of the air cooling refrigerant pipe 15a connecting the refrigerant outlet of the check valve 15 and the accumulator 16.

The outside heat exchanger 18a and the outside heat exchanger 20 are integrally provided and referred to as an outside heat exchanger unit 23.

The refrigerant is emitted from the compressor 11, passes through the three-way solenoid valve 17, bypass refrigerant pipe 17a, outside heat exchanger 18, bypass refrigerant pipe 18b, outside heat exchanger 18a, second inflator means 19, outside heat exchanger 20, bypass refrigerant pipe 20a, check valve 21, and accumulator 16 in this order, and returns to the compressor 11.

The refrigeration cycle in which the refrigerant is circulated in the refrigerant circulation circuit 9b is a second refrigeration cycle.

According to the vehicle air conditioner 4, the refrigerant circulation circuit 9a of the first refrigeration cycle and the refrigerant circulation circuit 9b of the second refrigeration cycle are connected in parallel relative to the compressor 11.

That is, the refrigerant circulation circuit 9b is a bypass passage of the refrigerant circulation circuit 9a.

Therefore, the outside heat exchangers 18, 18a, 20 and else are disposed on the bypass passage.

### 〈Structure of Cooling Water Circulation Circuit 10〉

The cooling water circulation circuit 10 is comprised of a water jacket passage of the engine 3, a cooling water circulation passage 24, and the heater core 8a.

The cooling water from the outlet of the water jacket is transmitted by a water pump (not shown) to the heater core 8a through the cooling water circulation passage 24 and returned to the passage of the water jacket from the heater core 8a.

The cooling water circulation passage 24 includes the passage of the water jacket of the engine 3, a cooling water passage 24a, and a cooling water passage 24b.

One end of the cooling water passage 24a is connected to the cooling water outlet of the water jacket while the other end thereof is connected to the cooling water inlet of the heater core 8a. The cooling water outlet of the heater core 8a is connected to one end of the cooling water passage 24b, and the other end thereof is connected to the cooling water inlet of the water jacket of the engine 3.

A heat exchanger for cooling water 25 is disposed in the middle of the cooling water circulation passage 24.

The heat exchanger for cooling water 25 includes a heat exchanger for cooling water 26 provided in the middle of the water passage 24a and a heat exchanger for cooling water 27 provided in the middle of the cooling water passage 24b.

A part of the cooling water passage 24a is formed in the heat exchanger for cooling water 26 while a part of the cooling water passage 24b is formed in the heat exchanger for cooling water 27.

An outside heat exchanger 18 is disposed between the heat exchangers for cooling water 26, 27.

The heat exchangers for cooling water 26, 27, outside heat exchanger 18 and else constitute a heat exchanger means for heating cooling water 28.

The heat exchangers 26, 27 for cooling water and the outside heat exchanger 18 are integrally provided to transfer heat therebetween.

Thereby, the engine cooling water in the heat exchangers for cooling water 26, 27 is heated by the heat of the high-temperature, high-pressure gaseous refrigerant supplied from the compressor 11 to the outside heat exchanger 18.

Deprived of heat by the engine cooling water, the high-temperature, high-pressure gaseous refrigerant is condensed inside the outside heat exchanger 18 to become a liquid refrigerant.

Also, the engine cooling water flowing from the heater core 8a to the water jacket is heated by the heat of the liquid refrigerant emitted from the outside heat exchanger 18.

### <Structure of Control System Including Control Unit (control means)>

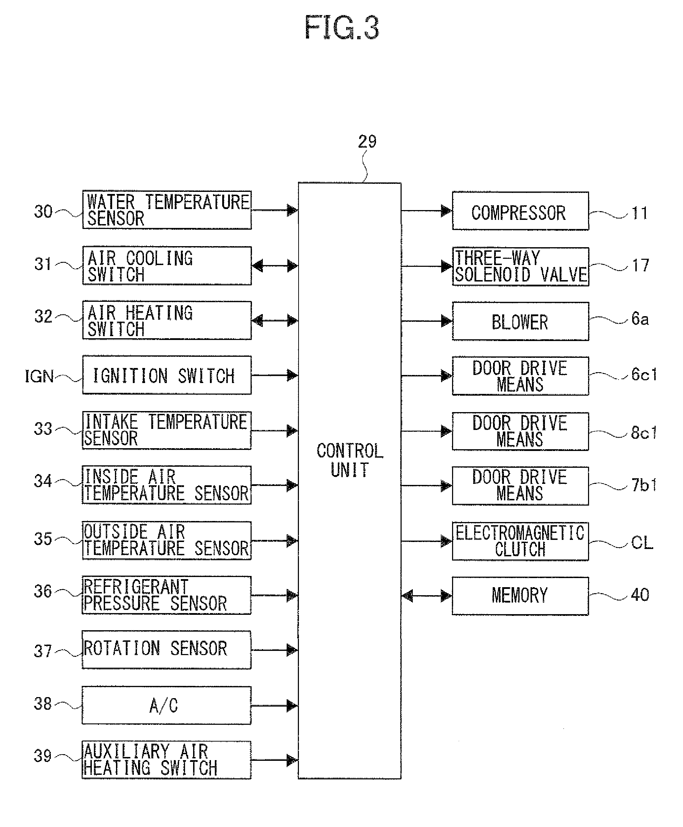

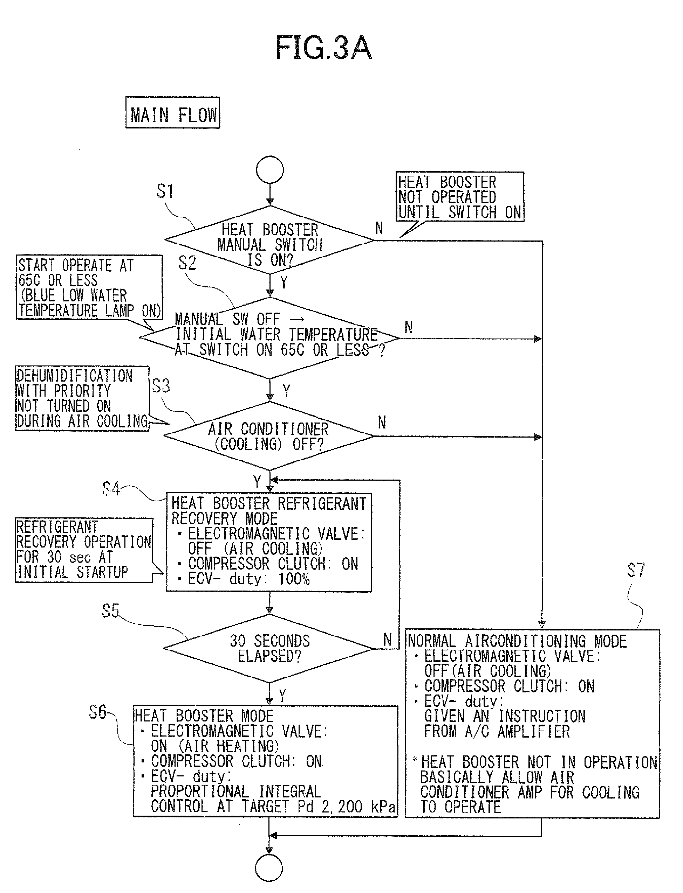

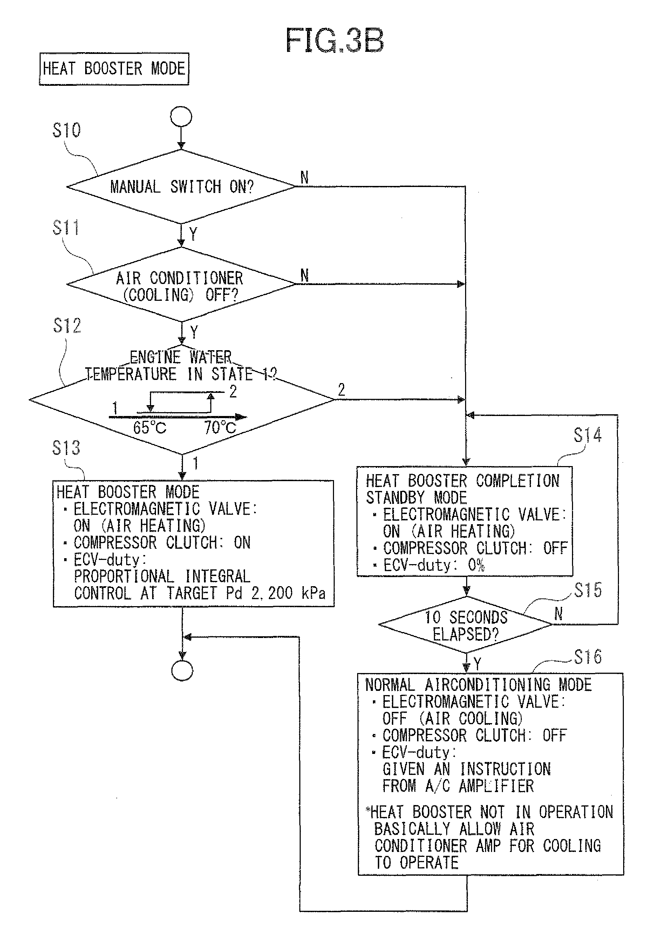

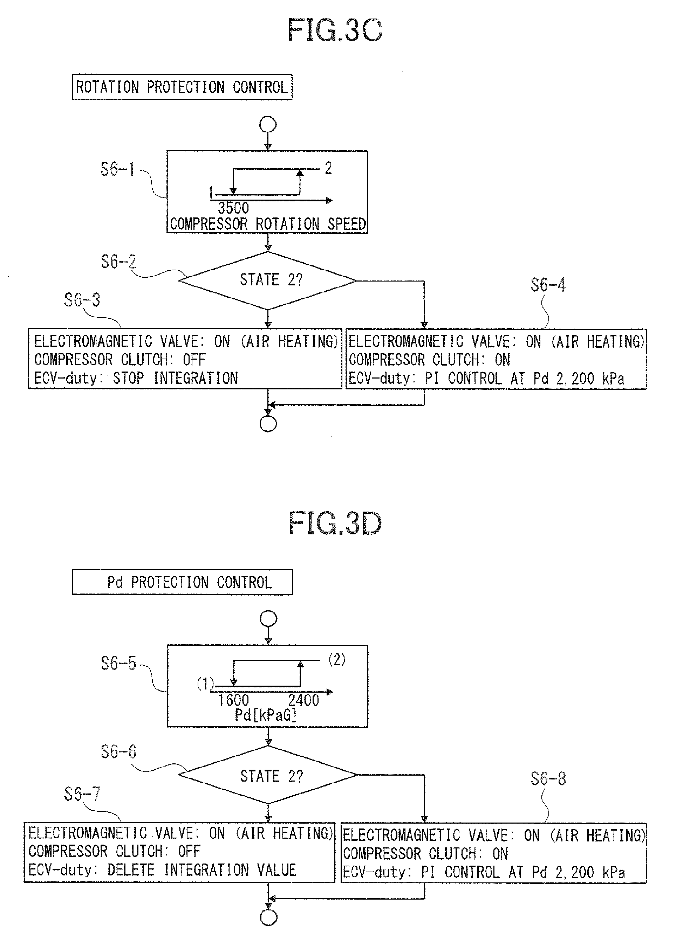

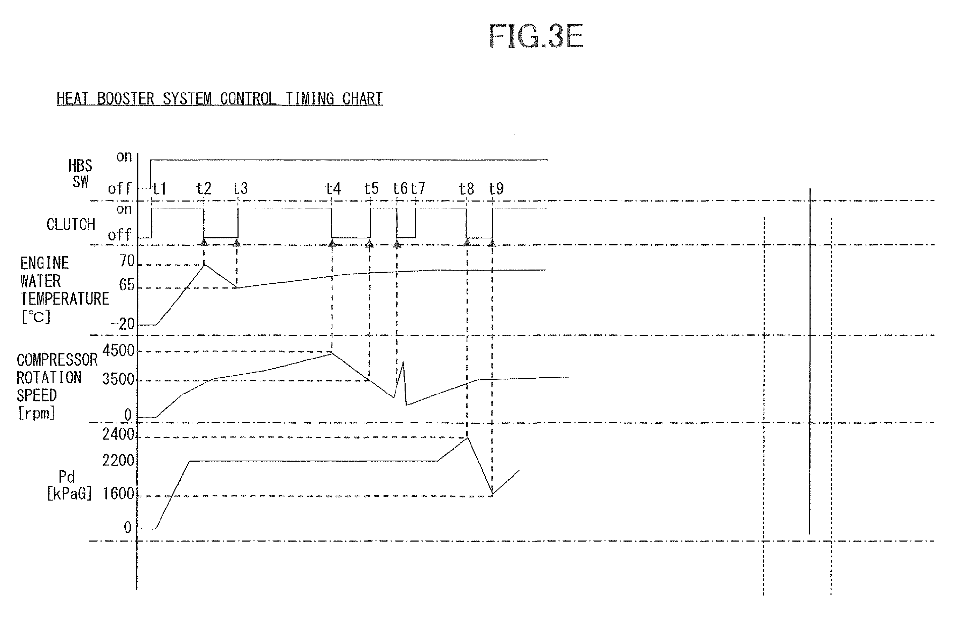

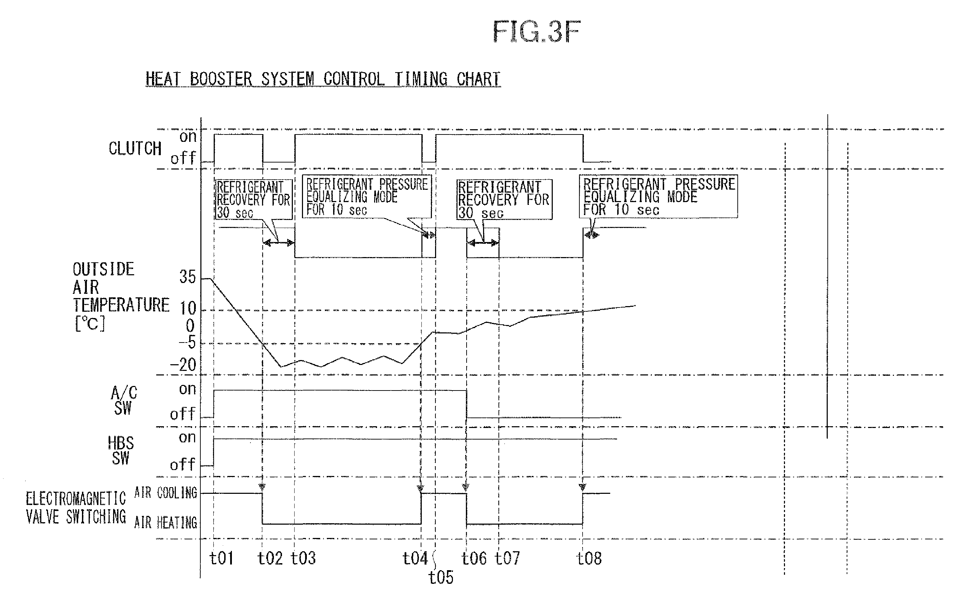

As shown in FIG. 3, the fan 6a, compressor 11, and three-way solenoid valve 17 are controlled by a control unit 29 such as an automatic amplifier to control the elements of the vehicle.

The control state of the vehicle air conditioner 4 is stored in a memory 40.

The cooling water circulation circuit 10 of the vehicle air conditioner 4 according to the present invention includes a water temperature sensor 30.

The water temperature sensor 30 includes a signal communication system (not shown).

The water temperature sensor 30 detects the temperature of the cooling water and outputs a detection signal indicating temperature information.

The detection signal is output from the water temperature sensor 30 to the control unit 29.

In FIG. 3 the vehicle air conditioner according to the present invention includes an air cooling switch 31 and an air heating switch 32. ON/OFF signals are output from the air cooling switch 31 and air heating switch 32 to the control unit 29.

The water temperature sensor 30 is provided in at least one of the passage of the water jacket of the engine 3 and the cooling water circulation passage 24 to transmit detected temperature information to the control unit 29 via the signal communication system.

The vehicle air conditioner 4 according to the present invention further includes a intake temperature sensor 33, an inside air temperature sensor 34, and an outside air temperature sensor 35 which are connected to the control unit 29.

The intake temperature sensor 33 detects the temperature of air suctioned into the airconditioning unit 5, the inside air temperature sensor 34 detects the temperature of the vehicle interior 1, and the outside air temperature sensor 35 detects the outside temperature of the vehicle interior 1.

The detection signals are output to the control unit 29 from the intake temperature sensor 33, inside air temperature sensor 34, and outside air temperature sensor 35.

The intake temperature sensor 33 is provided at upstream of the air passage of the evaporator 7a while the inside air temperature sensor 34 is provided inside the instrument panel.

However, the positions of the intake temperature sensor 33 and inside air temperature sensor 34 should not be limited to the above positions.

Further, the vehicle air conditioner 4 according to the present invention includes a refrigerant pressure sensor 36.

The refrigerant pressure sensor 36 is provided in the air cooling refrigerant pipe 11 a connecting the compressor 11 and the three-way solenoid valve 17.

The refrigerant pressure sensor 36 is connected to the control unit 29 to output a refrigerant pressure detection signal indicating refrigerant pressure information thereto.

The refrigerant pressure sensor 36 between the compressor 11 and three-way solenoid valve 17 can detect the pressure of refrigerant emitted from the compressor 11 irrespective of the switch position of the three-way solenoid valve 17.

Further, the vehicle air conditioner 4 according to the present invention includes a rotation speed sensor 37.

The rotation speed sensor 37 is connected to the control unit 27 to output a rotation speed detection signal indicating rotation speed information of the compressor 11 thereto.

The vehicle air conditioner 4 according to the present invention includes an air conditioner switch (A/C switch) 38 and an auxiliary air heating switch 39.

The air conditioner switch 38 and auxiliary air heating switch 39 are connected to the control unit 29 to output ON/OFF signals thereto.

In FIGs. 3E, 3F the auxiliary air heating switch 39 is a heat booster switch (HBS).

### [Function of Control Unit 29]

The control unit 29 controls the electromagnetic clutch CL of the above-described power transmitter means to intermittently connect/shut down (ON/OFF) according to the ON/OFF signals of the air cooling and air heating switches 31, 32, detections signals of the intake temperature sensor 33, inside air temperature sensor 34, outside air temperature sensor 35, and water temperature sensor 30, and the rotation speed detection signal of the rotation speed sensor 37, to drive/stop the compressor 11. Thereby, it controls the vehicle air conditioner 4 to adjust the temperature of the vehicle interior 1.

Note that the air cooling switch 31 and air heating switch 32 can be turned on and off not only by manipulation of an occupant of the vehicle but by the control unit 29.

### [Manual Airconditioning Mode (I) and Automatic Airconditioning Mode (II)]

The vehicle air conditioner 4 is operated in an air cooling operation mode (A) for normal cooling operation and an air heating operation mode (B).

Also, the vehicle air conditioner 4 can be operated in either of a manual airconditioning mode (I) and an automatic airconditioning mode (II) in which the air cooling operation mode (A) and air heating operation mode (B) are switched manually or automatically, respectively.

In the manual airconditioning mode (I) the control unit 29 automatically controls the vehicle air conditioner 4 to cool the air upon the turning on of the air cooling switch 31, and heat the air upon the turning-on of the air heating switch 32.

The control unit 29 performs the control on the basis of the detected outside temperature of the vehicle interior 1 (outside air temperature), the detected temperature of the vehicle interior 1 (inside temperature), and the target temperature (set temperature) of the vehicle interior.

The vehicle air conditioner 4 according to the present embodiment is set to be able to cool the air when the outside air temperature is a lower limit air cooling temperature (for example, -5 degrees C) or more and to be able to heat the air when it is an upper limit air heating temperature (for example, 10 degrees C).

The lower limit air cooling temperature and upper limit air heating temperature are changeable and not limited to the above values as -5 or 10 degrees C.

Further, the air cooling operation mode (A) and air heating operation mode (B) can be switched by a mode selection switch or else instead of the air cooling switch 31 and air heating switch 32.

In the automatic airconditioning mode (II) the control unit 29 automatically controls the vehicle air conditioner 4 to adjust the temperature of the vehicle interior 1 to the target temperature according to information on the outside and inside temperatures of the vehicle interior 1.

In the vehicle air conditioner 4 according to the present embodiment the control unit 29 is configured to automatically turn on and off the air cooling switch 31 and air heating switch 32 on the basis of information on the outside and inside temperatures of the vehicle interior 1.

The control unit 29 controls the air cooling switch 31 and air heating switch 32 to turn on and off on the basis of information on the vehicle elements and the on/off state of the auxiliary air heating switch 39.

The information on the vehicle elements includes the temperature detection signals from the intake temperature sensor 33, inside air temperature sensor 34, outside air temperature sensor 35, water temperature sensor 30, the refrigerant pressure detection signal from the refrigerant pressure sensor 36, and the rotation speed detection signal from the rotation speed sensor 37.

The control unit 29 acquires information on the air intake temperature in the airconditioning unit 5 according to the temperature detection signal of the intake temperature sensor 33, information on the air intake temperature in the vehicle interior 1 according to the temperature detection signal of the inside air temperature sensor 34, and information on the outside air temperature of the vehicle interior 1 according to the temperature detection signal of the outside air temperature sensor 35.

With the lower limit air cooing temperature (for example -5 degrees C) and upper limit air heating temperature (for example 1 degrees C) set as above, in the range between the two temperatures there is an overlapping temperature range in which both air heating and cooling operations are feasible.

The control unit 29 controls the air conditioner to preferentially perform normal air cooling (later-described automatic air cooling and heating control) in the overlapping range.

### [Function of Vehicle Air Conditioner 4]

Next, the function of the vehicle air conditioner 4 under the control of the control unit 29 is described.

In the manual airconditioning mode (I) and automatic airconditioning mode (II) the flow of the refrigerant does not change between the air cooling operation mode (A) and air heating operation mode (B).

By way of example, the flow of refrigerant in the air cooling and heating operation modes (A), (B) in the manual airconditioning mode (I) is described.

### [Manual Airconditioning Mode (I)]

### [Air Cooling Operation Mode (A)]

Receiving the ON signal from the air cooling switch 31 after the start of the engine 3, the control unit 29 starts normal air cooling control.

Then, the control unit 29 controls the three-way solenoid valve 17 to disconnect the refrigerant outlet of the compressor 11 and the bypass refrigerant pipe 17a and connect the refrigerant outlet of the compressor 11 and the refrigerant inlet of the condenser 12.

Next, the control unit 29 controls the door drive unit 8c1 of the heater unit 8 to close the upstream air passage of the heater core 8a with the mix door 8c, and controls the door drive means 6c1 of the intake unit 6b to close the outside air inlet 6b1 of the intake unit 6b and open the inside air inlet 6b2 with the intake door 6c.

The control unit 29 controls the fan 6a to suction the air from the vehicle interior 1 via the inside air inlet 6b2.

The suctioned air passes through the air passage 5a, the air passage in the evaporator 7a, the air bypass passage 8b of the heater unit 8 and the mix chamber 8d and is blown from the outlet 8e to the vehicle interior 1.

Meanwhile, the control unit 29 controls the compressor 11 to start compressing a gaseous refrigerant.

Thereby, a high-temperature, high-pressure compressed refrigerant is emitted to the air cooling refrigerant pipe 11a.

The compressed refrigerant is supplied to the condenser 12 through the three-way solenoid valve 17 for cooling down and condensation and turns to a liquid refrigerant.

The liquid refrigerant is accommodated in the liquid tank 13, thereafter, supplied to the first inflator means 14 through the air cooling refrigerant pipe 13a and inflated and depressurized therein.

The depressurized liquid refrigerant is vaporized in the evaporator 7a in the vehicle interior 1 and turns to a gaseous refrigerant.

This low pressure liquid refrigerant while being vaporized absorbs heat from the air flowing in the air passage of the evaporator 7a.

The cooled air is blown from the outlet 8e to the vehicle interior 1 to cool the air in the vehicle interior 1, as described above.

At this point, the liquid refrigerant from the first inflator means 14 is vaporized to a gaseous refrigerant and this gaseous refrigerant flows through the air cooling refrigerant pipe 7a1, check valve 15, air cooling refrigerant pipe 15a, and accumulator 16 and returns to the compressor 11.

Thus, in the normal air cooling operation, the refrigerant flows as indicated by the arrow f1 to cool the air in the vehicle interior 1.

### [Air heating Operation Mode (B)]

Upon turning-on of an ignition switch (not shown) of the vehicle to start the engine 3, the water temperature sensor 30 detects the temperature of the engine cooling water in the water jacket and outputs a temperature detection signal to the control unit 29.

Then, upon turning of the air heating switch 32 as an instruction to start heating operation, the control unit 29 determines whether or not the engine cooling water has reached a required temperature (set temperature) for heating the air in the vehicle interior 1 according to the temperature detection signal from the water temperature sensor 30.

The set temperature can be set by a known temperature setting structure or method, therefore, a detailed description thereof is omitted.

Next, when determining that the engine cooling water has not reached the set temperature during an engine start period due to a low outside air temperature in winter, the control unit 29 controls the three-way solenoid valve 17 to disconnect the refrigerant outlet of the compressor 11 and the refrigerant inlet of the condenser 12 and connect the refrigerant outlet of the compressor 11 and the bypass refrigerant pipe 17a of the bypass passage.

Even by operating the compressor 11, the refrigerant does not flow into the condenser 12, liquid tank 13, first inflator means 14, evaporator 7a and else.

Then, the control unit 29 controls the door drive unit 8c1 of the heater unit 8 to drive the mix door 8c to open the upstream of the air passage of the heater core 8a and controls the door drive unit 6c1 of the intake unit 6b to drive the intake door 6c to close the outside air inlet 6b1 and open the inside air inlet 6b2 of the intake unit 6b.

Then, the control unit 29 drives the fan 6a to suction the air in the vehicle interior 1 from the inside air inlet 6b2.

The suctioned air passes through the air passage 5a, the air passage of the evaporator 7a, the air passage (not shown) of the heater unit 8, and the mix chamber 8d and is blown to the vehicle interior 1 from the outlet 8e.

Since the refrigerant is not supplied to the evaporator 7a, the air emitted from the fan 6a and passing through the air passage of the evaporator 7a is not cooled by operating the compressor 11.

Meanwhile, the control unit 29 drives the compressor 11 to compress the gaseous refrigerant and emit this high-temperature, high-pressure compressed refrigerant to the air cooling refrigerant pipe 11a.

The compressed refrigerant passes through the three-way solenoid valve 17, bypass refrigerant pipe 17a, outside heat exchanger 18, bypass refrigerant pipe 18b, outside heat exchanger 18a, second inflator means 19, outside heat exchanger 20, bypass refrigerant pipe 20a, check valve 21, and accumulator 16 in this order and returns to the compressor 11.

The compressed refrigerant is condensed, releasing heat in the outside heat exchanger 18, to turn to a high-temperature, high-pressure liquid refrigerant and it passes through the outside heat exchanger 18a of the outside heat exchanger unit 23, second inflator means 19, and outside heat exchanger 20 in this order and is emitted from the outside heat exchanger 20 to the bypass refrigerant pipe 20a.

Then, the heat of the liquid refrigerant flowing in the outside heat exchanger 18a is absorbed by the refrigerant in the outside heat exchanger 20.

The heat deprived liquid refrigerant is supplied to the second inflator means 19 from the outside heat exchanger 18a.

The liquid refrigerant is inflated and depressurized in the second inflator means 19, flows into the outside heat exchanger 20 to be vaporized to turn to a gaseous refrigerant, absorbing heat emitted from the outside heat exchanger 18a.

The vaporized gaseous refrigerant passes through the bypass refrigerant pipe 20a, check valve 15, and accumulator 16, and returns to the compressor 11.

Also, the engine cooling water from the water jacket of the engine 3 passes through the heat exchanger for cooling water 26, heater core 8a, and heat exchanger for cooling water 27 and returns to the water jacket of the engine 3.

While passing through the outside heat exchanger 18, heat from the compressed refrigerant transfers between the outside heat exchanger 18 and the heat exchanger for cooling water 26 to heat the engine cooling water flowing to the heater core 8a in the heat exchanger for cooling water 26.

The compressed refrigerant also heats the engine cooling water flowing from the heater core 8a to the water jacket in the heat exchanger for cooling water 27 by transferring heat between the outside heat exchanger 18 and the heat exchanger for cooling water 27.

The heated engine cooling water by the outside heat exchanger 18 and heat exchanger for cooling water 26 is supplied to the heater core 8a and warms the air in the air passage thereof. The warmed air is blown to the vehicle interior 1 from the outlet 8e to heat the vehicle interior 1.

As functioned above, the heat of the high-pressure, condensed gaseous refrigerant from the compressor 11 is absorbed by the cooling water in the outside heat exchanger 18. Then, the heat is negated with vaporization heat of the low-pressure refrigerant in the outside heat exchanger unit 23 to generate a difference in the pressure of the refrigerants. Thereby, the cooling water can absorb only an amount of heat equivalent to the power of the compressor, forming an ideal refrigeration cycle.

Thus, in air heating operation, the engine cooling water is heated by the flow of refrigerant in air heating cycle as indicated by the arrow f2, to heat the air in the vehicle interior 1.

### [Automatic Air Cooling and Heating Operation]

### [Airconditioning Control of Vehicle Air Conditioner 4 in Engine Start Period after Engine 3 Stops for Long Time]

By manipulation of an ignition key (not shown) to activate the control unit 29 and turning on an ignition switch IGN, the engine 3 starts operating.

At the engine start in the activation of the control unit 29, the temperature detection signals from the temperature sensors of the vehicle elements (intake temperature sensor 33, inside air temperature sensor 34, outside air temperature sensor 35, water temperature sensor 30), the refrigerant pressure detection signal from the refrigerant pressure sensor 36, the rotation speed detection signal from the rotation speed sensor 37, the ON/OFF signal from the auxiliary air heating switch 39 are input to the control unit 29.

The control unit 29 starts controlling the air cooling and heating operation in accordance with the input signals.

Specifically, the control unit 29 controls the turning on and off of the air cooling switch 31 and air heating switch 32 and that of the electromagnetic clutch CL in accordance with the input signals as shown in the flowcharts in FIG. 3A to FIG. 3D and the timing charts in FIG. 3E to FIG. 3F.

First, referring to FIG. 3E, a control over the air conditioner switch 38 and auxiliary air heating switch 39 to turn on at time t1 is described.

Referring to FIG. 3F, a control over the air conditioner switch 38 and auxiliary air heating switch 39 to turn on at time t01 is described.

### [Air Cooling and Heating Switching Control]

### <Step S 1 >

When the air conditioner switch 38 is turned on during the engine 3 in operation, the control unit 29 determines whether or not the auxiliary air heating switch 39 is turned on. When the switch is not on, it proceeds to step S7 and performs control in the normal airconditioning mode in which the auxiliary air heating mode is not operated. When the switch is on, it proceeds to step S2.

### <Step S2>

When the auxiliary air heating switch 39 is on, the control unit 29 determines whether or not the initial temperature of the engine cooling water is 65 degrees C (set temperature) or more according to the temperature detection signal from the water temperature sensor 30.

The control unit 29 proceeds to step S7 to perform control in the normal airconditioning mode when the initial temperature of the engine cooling water is 65 degrees C or more.

The control unit 29 proceeds to step S3 when it is less than 65 degrees C, as shown in at time t1 in FIG. 3E, for example.

### <Step S3>

The control unit 29 acquires outside air temperature information according to the temperature detection signal from the outside air temperature sensor 35.

The control unit 29 turns on the air heating switch 32 and sets the switch position of the three-way solenoid valve 17 to air heating when the outside air temperature is -5 degrees C or less, as shown in time t02 to t04 in FIG. 3F.

Thus, the three-way solenoid valve 17 disconnects the refrigerant outlet of the compressor and the refrigerant inlet of the condenser 12, and connects the refrigerant outlet of the compressor 11 and the bypass refrigerant pipe 17a of the bypass passage.

At time t04 in FIG. 3F, when the outside air temperature exceeds -5 degrees C, the control unit turns on the air cooling switch 31 and sets the switch position of the three-way solenoid valve 17 to air cooling.

Thus, the three-way solenoid valve 17 connects the refrigerant outlet of the compressor and the refrigerant inlet of the condenser 12, and disconnects the refrigerant outlet of the compressor 11 and the bypass refrigerant pipe 17a of the bypass passage.

As shown at and after time t04, air heating is required when the outside air temperature is over -5 degrees C and 10 degrees C or less.

However, in a case where the air conditioner switch 38 is operated to set the switch position of the three-way solenoid valve 17 to air cooling, the control unit 29 takes priority of cooling operation to prevent hunting between the air cooling and heating of the vehicle air conditioner 4.

In proceeding to the step S3 from step S2, the control unit 29 turns off the air cooling switch 31 and determines whether or not the vehicle air conditioner 4 is in the air cooling operation mode (A).

Determining that it is in the air cooling operation mode (A), the control unit 29 proceeds to step S7 and performs control in the normal airconditioning mode.

Meanwhile, determining that it is not in the air cooling operation mode (A), the control unit 29 proceeds to step S4 and starts a refrigerant recovery mode for auxiliary air heating operation.

### <Step S4>

Here, at a stop of the air heating operation in the air heating operation mode (B), the refrigerant outlet of the compressor 11 and the refrigerant inlet of the condenser 12 are disconnected while the refrigerant outlet of the compressor 11 and the bypass refrigerant pipe of the bypass passage 17a are connected.

If the amount of refrigerant remaining in the condenser 12 and evaporator 7a of a large volume is small, no problem will occur in the air heating operation which has started by the control unit 29 after the air heating operation mode (B).

However, after a stop of the normal air cooling in the air cooling operation mode (A), the refrigerant outlet of the compressor 11 and the refrigerant inlet of the condenser 12 are connected while the refrigerant outlet of the compressor 11 and the bypass refrigerant pipe of the bypass passage 17a are disconnected.

In this state a large amount of refrigerant remains in the condenser 12 and evaporator 7a of a large volume.

When the control unit 29 is operated to start air heating operation, the refrigerant in the condenser 12 and evaporator 7a cannot be used in the heat pump cycle for heating (air heating) the engine cooling water.

Further, continuation of the air heating or cooling operation with a lack of refrigerant may cause a shortage of lubricant to the compressor.

In order to prevent these problems, the control unit 29 operates in the refrigerant recovery mode, proceeding to the step S4 after a stop of the normal cooling operation in the air cooling operation mode (A).

In the refrigerant recovery mode the control unit 29 controls the three-way solenoid valve 17 to maintain the connection of the refrigerant outlet of the compressor 11 and the refrigerant inlet of the condenser 12 and the disconnection of the refrigerant outlet of the compressor 11 and the bypass refrigerant pipe 17a of the bypass passage.

Further, proceeding to the step S4 after a stop of the air heating operation in the air heating operation mode (B), the control unit 29 controls the three-way solenoid valve 17 to connect the refrigerant outlet of the compressor 11 and the refrigerant inlet of the condenser 12 and disconnect the refrigerant outlet of the compressor 11 and the bypass refrigerant pipe 17a of the bypass passage.

Then, the control unit 29 turns on the electromagnetic clutch CL at time t1 in FIG. 3E (time t01 in FIG. 3F) to transmit the rotation of the engine 3 to the compressor 11.

Thereby, the compressor 11 is driven by the rotation of the engine 3 to start compressing the refrigerant after time t1 in FIG. 3E (time t01 in FIG. 3F).

Here, the refrigerant is compressed in the normal air cooling in the air cooling operation mode (A) while the control unit 29 stops the fan 6a.

Because of this, the refrigerant flows as indicated by the arrow f1 in the normal cooling in the air cooling operation mode (A) and that in the condenser 12 and evaporator 7a is recovered in the accumulator 16.

The control unit 29 starts recovering the refrigerant in step S4 at time t1 in FIG. 3E (time t01 in FIG. 3F) and proceeds to step S5.

Note that the compressor 11 is a continuous variable displacement compressor as disclosed in Patent Document 2, for example.

This continuous variable displacement compressor or the compressor 11 is a wobble plate type reciprocating compressor and the inclination of the wobble plate is controlled by electric signals from outside to change a piston stroke and adjust a discharge amount.

Therefore, the compressor 11 includes a control valve (not shown, hereinafter ECV) such as an electromagnetic valve which is controllable by electric signals from outside.

For example, with use of an electromagnetic valve as ECV communicating with the high-pressure side of the compressor 11, the low-pressure side thereof and a crankcase are connected through a passage with a predetermined opening level, and the pressure in the crankcase is transferred to the low-pressure side of the compressor 11.

Accordingly, by adjusting the opening level of the electromagnetic valve to introduce or shut down the pressure in the high-pressure side of the compressor 11, it is possible to control the pressure in the crankcase and the discharge amount of the refrigerant from the compressor 11.

A duty signal with a predetermined duty value (discharge amount rate) is output from the control unit 29 to the electromagnetic valve.

The length of time in which the electromagnetic valve is opened is decided according to a magnitude of the duty value to decide the discharge amount of the compressor 11 accordingly.

The control over the ECV of the compressor 11 by a duty signal can be realized by a method disclosed in Patent Document 3 or else.

In the step S4 the compressor 11 is driven at a duty ratio of 100% to control the ECV of the compressor 11.

Alternatively, the control unit 29 can omit the steps S4, S5 and proceed to step S6 when it proceeds to the step S4 after stopping the air heating in the air heating operation mode (B).

In view of this, the control unit 29 can be configured to acquire, at a start of its operation, the final control state of the vehicle air conditioner 4 in a previous operation from the memory 40.

### <Step S5 >

The control unit 29 starts the refrigerant recovery operation in the refrigerant recovery mode at time t01 in FIG. 3F, controls the three-way solenoid valve 17 at time t02 to disconnect the refrigerant outlet of the compressor 11 and the refrigerant inlet of the condenser 12 and connect the refrigerant outlet of the compressor 11 and the bypass refrigerant pipe 17a of the bypass passage, and sets the switch position of the three-way solenoid valve to air heating.

Then, the control unit 29 turns off the electromagnetic clutch CL at time t02 and stops transmitting the power to the compressor 11 from the rotation of the engine 3.

In this case the refrigerant in the condenser 12 and evaporator 7a is recovered in the accumulator 16 due to differences in pressure between the condenser 12 and accumulator 16 and between the evaporator 7a and accumulator 16.

The control unit 29 determines whether or not a refrigerant recovery time (time from turning off of the electromagnetic clutch CL at time t02) is a set time (for example, 30 seconds). When it has not reached the set time, the control unit returns to step S4 while determining that it has reached the set time, the control unit proceeds to the auxiliary air heating mode in step S6.

As shown in FIG. 3E, the temperature of the engine cooling water gradually rises over time after elapse of the set refrigerant recovery time.

Further, the control unit 29 turns off the electromagnetic clutch CL at time t04 in FIG. 3F if the intake pressure of the compressor 11 is equal to or over a set pressure, to stop the operation of the compressor 11 for a set time (for example, 10 seconds) so that the intake pressure of the compressor 11 is reduced to less than the set pressure.

As the discharge pressure of the compressor 11 gradually acts on the accumulator 16, the intake pressure thereof is reduced, resulting in equalizing the pressure of the entire refrigerant passage.

Thus, with the equalization of the pressure of the entire refrigerant passage and the smaller intake pressure than the set pressure, the control unit 29 can operate the compressor 11 again without a sudden increase in the intake pressure thereof exceeding the set pressure.

Therefore, at time t05 the control unit 29 turns on the electromagnetic clutch CL to transmit the rotational power of the engine 3 to the compressor 11 to drive it.

At the outside air temperature being over -5 degrees C, the control unit 29 equalizes the pressure of the entire refrigerant passage as above, turns off the air conditioner switch 38 at time t06, and changes the switch position of the three-way solenoid valve 17 to air heating from air cooling to recover the refrigerant due to a pressure difference as above until time t07 (for 30 seconds from time t06, for example).

### [Control in Auxiliary Air heating Mode (Heat Booster Mode)]

### <Step S6>

The control unit 29 turns on the electromagnetic clutch CL at time t03 to drive the compressor 11 and start controlling the vehicle air conditioner 4 in the auxiliary air heating mode.

Herein, "electromagnetic valve: ON (air heating)" in step S6 of FIG. 3A signifies that the auxiliary air heating is made feasible by controlling the three-way solenoid valve 17 to disconnect the refrigerant outlet of the compressor 11 and the refrigerant inlet of the condenser 12 and connect the refrigerant outlet of the compressor 11 and the bypass refrigerant pipe 17a of the bypass passage.

Likewise, "electromagnetic valve: OFF (air cooling)"in step S7 of FIG. 3A signifies that the normal air cooling is made feasible by controlling the three-way solenoid valve 17 to connect the refrigerant outlet of the compressor 11 and the refrigerant inlet of the condenser 12 and disconnect the refrigerant outlet of the compressor 11 and the bypass refrigerant pipe 17a of the bypass passage.

The control unit 29 can omit the refrigerant recovery in steps S4, S5 if it is not needed and proceeds to the step S6, and turns on the electromagnetic clutch CL at time t03 to drive the compressor 11.

The control unit 29 acquires the rotation speed of the compressor 11 from the rotation detection signal from the rotation sensor 37, and when it has reached 4,000[rpm] at time t4, it decreases the rotation speed of the compressor 11 by turning off the electromagnetic clutch CL.

Meanwhile, the control unit 29 acquires the rotation speed of the compressor 11 from the rotation detection signal from the rotation sensor 37, and when it is smaller than 3,500[rpm] at time t5, it increases the rotation speed of the compressor 11 by turning on the electromagnetic clutch CL.

The control unit 29 acquires the rotation speed of the compressor 11 from the rotation detection signal from the rotation sensor 37, and when it is larger than 3,500[rpm] at time t6, it decreases the rotation speed of the compressor 11 by turning off the electromagnetic clutch CL.

Further, the control unit 29 acquires the temperature of the engine cooling water from the temperature detection signal from the water temperature sensor 30, and when it has reached 70 degrees C, it decreases the rotation speed of the compressor 11 by turning off the electromagnetic clutch CL at time t2.

Meanwhile, the control unit 29 acquires the temperature of the engine cooling water from the temperature detection signal from the water temperature sensor 30, and when it has reached 65 degrees C, it increases the rotation speed of the compressor 11 by turning on the electromagnetic clutch CL at time t3.

Moreover, in such auxiliary air heating operation the control unit 29 controls the rotation and refrigerant discharge pressure of the compressor 11 as shown in FIGs. 3C, 3D, respectively.

Next, referring to the flowchart in FIG. 3C, the rotation control over the compressor 11 is described.

### <Rotation Control of Compressor 11>

Under the control of the compressor 11 by the control unit 29, the minimum rotation speed thereof is set to 3,500 [rpm] and the maximum rotation speed to 4,000 [rpm].

The values of the minimum and maximum rotation speeds are changed depending on the configuration of the compressor 11, therefore, they should not be limited to such values as 3,500[rpm], 4,000[rpm].

The rotation control of the compressor 11 during the auxiliary air heating by the control unit 29 is described with reference to FIG. 3C under such a condition by way of example.

### < Step S6-1 >

The control unit 29 acquires a change over time in the rotation detection signal from the rotation sensor 37 and proceeds to step S6-2.

Herein, a state of the compressor 11 that the rotation speed is rising from the minimum rotation speed 3,500[rpm] to the maximum rotation speed 4,000[rpm] is referred to as a state (1), and a state thereof that the rotation speed is falling from the maximum rotation speed 4,000 [rpm] to the minimum rotation speed 3,500 [rpm] is referred to as a state (2).

### <Step S6-2>

The control unit 29 determines whether or not the compressor is in the state (2), and when it is not in the state (2) but in the state (1), it proceeds to step S6-4, and when it is in the state (2), it proceeds to step S6-3.

### < Step S6-3 >

The control unit 29 controls the three-way solenoid valve 17 to be "electromagnetic valve: ON (air heating)" to enable the auxiliary air heating, and turns off the electromagnetic clutch CL to stop the rotation of the compressor 11.

Then, the control unit 29 deletes an integration value for the ECV control of the compressor 11 and returns to step S6-1.

### <Step S6-4>

The control unit 29 controls the three-way solenoid valve 17 to be "electromagnetic valve: ON (air heating)" to enable the auxiliary air heating, and turns on the electromagnetic clutch CL to drive the compressor 11.

In this case the control unit 29 sets the duty ratio at 100% for the ECV control and controls the compressor 11 to operate at the discharge pressure Pd of a target value 2,200[kPa], and returns to step S6-1.

### <Pressure Control of Compressor 11 >

The control unit 29 allows the refrigerant pressure sensor 36 to detect the discharge pressure of the compressor 11 and acquire a refrigerant pressure detection signal from the refrigerant pressure sensor 36.

The control unit 29 turns off the electromagnetic clutch CL to stop the compressor 11 and decrease the discharge pressure Pd thereof when the discharge pressure has reached 2,400[kPa] at time t8 in FIG. 3E.

Meanwhile, the control unit 29 turns on the electromagnetic clutch CL to drive the compressor 11 and increase the discharge pressure Pd of the compressed refrigerant when the discharge pressure has fallen to 1,600[kPaG] at time t9 in FIG. 3E.

In the vehicle air conditioner 4 according to the present embodiment, the minimum discharge pressure of the compressor 11 is set to 1,600[kPaG] and the maximum discharge pressure is set to 2,400 [kPaG] under the control of the compressor 11 by the control unit 29.

The values of the minimum and maximum discharge pressures are changed depending on the configuration of the compressor 11 so that they should not be limited to such values as 1,600[kPaG], 2,400[kPaG].

Thus, the control unit 29 is configured to control the duty ratio of the compressor 11 for the ECV control and the electromagnetic clutch CL to turn on and off so as to adjust the discharge pressure Pd to the target discharge pressure of 2,200[kPaG].

Here, the duty ratio control of the compressor 11 for the ECV control is a proportional integral control.

Moreover, such pressure control is performed according to the flowchart in FIG. 3D to control the discharge pressure Pd of the compressor 11 to the target discharge pressure of 2,200[kPa].

### < Step S6-5>

The control unit 29 acquires a change over time in the refrigerant pressure detection signal of the refrigerant pressure sensor 36 and proceeds to step S6-6.

Herein, a state of the compressor 11 that the discharge pressure is rising from the minimum discharge pressure 1,600[kPaG] to the maximum discharge pressure 2,400[kPaG] is referred to as a state (1), and a state thereof that the rotation speed is falling from the maximum discharge pressure 2,400 [kPaG] to the minimum discharge pressure 1,600 [kPaG] is referred to as a state (2).

### < Step S6-6>

The control unit 29 determines whether or not the discharge pressure of the compressor 11 is in the state (2). When it is not in the state (2) but in the state (1), it proceeds to step S6-8, and when it is in the state (2), it proceeds to step S6-7.

### < Step S6-7>

The control unit 29 controls the three-way solenoid valve 17 to be "electromagnetic valve: ON (air heating)" to enable the auxiliary air heating.

It turns off the electromagnetic clutch CL to stop the rotation of the compressor 11.

Then, the control unit 29 deletes an integration value for the ECV control of the compressor 11 and returns to step S6-5.

### <Step S6-8>

The control unit 29 controls the three-way solenoid valve 17 to be "electromagnetic valve: ON (air heating)" to enable the auxiliary air heating.

It turns on the electromagnetic clutch CL to drive the compressor 11 and returns to step S6-5.

The control unit 29 sets the duty ratio of the compressor 11 at 100% for the ECV control and controls the compressor 11 to operate at the discharge pressure Pd of the target value of 2,200[kPa].

### [Normal Air Cooling Operation]

### <Step S7>

When the outside air temperature exceeds 10 degrees C, the control unit 29 controls the three-way solenoid valve 17 to connect the refrigerant outlet of the compressor 11 and the refrigerant inlet of the condenser 12 and disconnect the refrigerant outlet of the compressor 11 and the bypass refrigerant pipe 17a of the bypass passage.

Also, the control unit 29 turns on the electromagnetic clutch CL and controls the normal air cooling operation in the air cooling operation mode (A).

### [Airconditioning Control of Vehicle Air Conditioner 4 during Start Period after Short Stop of Engine 3]

Next, an airconditioning control of the vehicle air conditioner 4 when the vehicle stops during the air heating operation and the engine 3 is stopped and restarted to resume the operation is described.

The airconditioning control state of the vehicle air conditioner 4 at the stop of the engine 3 is stored in the memory 40. Thereby, it is possible not to recover the refrigerant for auxiliary air heating at the restart of the engine 3 and the air heating operation.

A state of the engine cooling water at stop of the engine 3 that it is rising in temperature from 65 to 70 degrees C during air heating operation is defined to be a state (1) and a state that it is falling from 70 to 65 degrees C is defined to be a state (2).

These states are stored in the memory 40 at the stop of the engine 3, which makes it possible to determine whether the air heating control of the vehicle air conditioner 4 is performed from the beginning or from the engine stop point.

By restarting the air heating control of the vehicle air conditioner 4 from the engine stop point, it is possible to shorten a length of time for starting air heating in the vehicle interior 1.

In view of this, the control unit 29 controls the air heating operation following the flowchart in FIG. 3B at a time when the engine 3 is operated in a short time after the stop during the air heating operation.

Such air heating control is described in the following.

### [Air heating and Cooling Switch Control]

### <Step S 1 0>

First, the control unit 29 determines whether or not the auxiliary air heating switch 39 is on in step S1 in FIG. 3A when the engine 3 is started by the ignition switch IGN and the air conditioner switch 38 is turned on. At the switch being not on, it proceeds to step S14 to perform control in the normal airconditioning mode and at the switch being on, it proceeds to step S 11.

### <Step S11>

The control unit 29 determines whether or not the air cooling switch 31 is off or the vehicle air conditioner 4 is in the air cooling operation.

Determining that the vehicle air conditioner 4 is in the air cooling operation mode (A), the control unit 29 proceeds to step S 14 to perform control in the normal airconditioning mode.

Meanwhile, determining that the vehicle air conditioner 4 is not in the air cooling operation mode (A), the control unit 29 proceeds to step S12.

### <Step S 12>

The control unit 29 determines whether or not the temperature of the engine cooling water is rising from 65 to 70 degrees C during the air heating operation or in the state (1) at the stop of the engine 3. In the state (1) it proceeds to step S13 while not in the state (1) it proceeds to step S 14.

### <Step S13>

The control unit 29 performs the steps S6 in FIG. 3A, S6-1 to S6-4 in FIG. 3C, S6-5 to S6-8 in FIG. 3D, and returns to step S10.

### <Step S 14>

The control unit 29 proceeds to an auxiliary air heating completion standby mode.

In the completion standby mode the control unit 29 controls the three-way solenoid valve 17 to be able to shift to the normal airconditioning mode and proceeds to step S15.

In the completion standby mode the control unit 29 turns off the electromagnetic clutch CL to stop the compressor 11.

At this point the control unit 29 does not perform duty control over the ECV of the compressor 11 so that the duty ratio is 0%.

### <Step S15>

The control unit 29 counts the time from start of the auxiliary air heating completion standby mode to the refrigerant discharge from the compressor 11 and determines whether or not a predetermined time (for example, 10 seconds) has elapsed.

With the predetermined time not elapsed, the control unit 29 returns to step S14 and with the predetermined time elapsed, it proceeds to step S 16.

### <Step S 16>

The control unit 29 performs the step S7 in the normal airconditioning mode in FIG. 3B.

### <Operational Effects of the Embodiment>

The thus-configured vehicle air conditioner 4 can operate in the auxiliary air heating mode in which refrigerant is circulated through the refrigerant circulation circuit 9b for air heating, and selectively execute the normal airconditioning mode and the auxiliary air heating mode on the basis of the condition of not only the outside and inside air temperatures but also the cooling water temperature. Because of this, it can introduce warm air into the vehicle interior even immediately after the start of the engine 3 by supplying to the heater core 8a the cooling water heated by the heat exchanger means for heating cooling water 28 while the engine 3's cooling water temperature is rising enough for the air heating after the engine starts.

Further, the vehicle air conditioner 4 according to the present embodiment is configured to be switched to the auxiliary air heating mode only when the auxiliary air heating switch 39 is turned on in the normal airconditioning mode but not in the air cooling operation. This can prevent hunting between the air cooling and air heating cycles since the normal airconditioning mode is performed with priority when the compressor 11 is driven for the air heating in an overlapping temperature range in which air heating and air cooling are both required.

Further, in switching to the auxiliary air heating mode after the air cooling operation, the vehicle air conditioner 4 according to the present embodiment can operate in the refrigerant recovery mode in which the remnant refrigerant in the condenser 12 and evaporator 7a is recovered in the accumulator 16. Therefore, it can efficiently use the refrigerant in the auxiliary air heating and efficiently perform air heating. Besides, the compressor 11 can be free from a shortage of lubricant.

Further, the vehicle air conditioner 4 according to the present embodiment includes the memory 40 to store the airconditioning control state of the vehicle air conditioner 4 at stop of the engine 3. Accordingly, it can determine whether or not to need to operate in the refrigerant recovery mode when the vehicle drive unit 4 is restarted to resume the air heating operation or whether or not to restart the air heating control of the vehicle air conditioner 4 from the beginning or from the engine stop point on the basis of the cooling water temperature.

Although the present invention has been described in terms of exemplary embodiments with reference to the drawings, it is not limited thereto. It should be appreciated that variations or modifications may be made in the embodiments described by persons skilled in the art without departing from the scope of the present invention as defined by the following claims.

In the present embodiment the cooling water is circulated, for cooling the engine, in the water jacket passage (cooling water passage) provided around the combustion chamber (heat generator) of the engine 3 (vehicle drive unit). Alternatively, it can be for an electric motor (vehicle drive unit) of a motor driven vehicle and circulated in the water jacket passage (cooling water passage) provided in the housing (heat generator) of an electric motor for driving a vehicle.

Further, the cooling water can be used for cooling the heat generator of a secondary battery and else other than an electric motor.

### Reference Signs List

- 1: vehicle interior
- 3: engine (vehicle drive unit)
- 4: vehicle air conditioner
- 7a: evaporator
- 8a: heater core
- 9a: refrigerant circulation circuit for air cooling
- 9b: refrigerant circulation circuit for air heating
- 10: cooling water circulation circuit for air heating
- 11: compressor
- 12: condenser
- 14: first inflator means
- 16: accumulator
- 17: three-way solenoid valve
- 18: outside heat exchanger
- 19: second inflator means
- 23: outside heat exchanger unit
- 25: heat exchanger for cooling water
- 28: heat exchanger means for heating cooling water
- 29: control unit(control means)
- 30: water temperature sensor
- 34: inside air temperature sensor
- 35: outside air temperature sensor
- 38: air conditioner switch
- 39: auxiliary air heating switch
- 40: memory

## Claims

1. An air conditioner for a vehicle, comprising:
a refrigerant circulation circuit for air cooling to circulate a refrigerant through a compressor, a refrigerant condenser provided outside a vehicle interior, a first inflator means, an evaporator for air cooling provided in the vehicle interior, and an accumulator for vapor-liquid separation in this order;
a cooling water circulation circuit for air heating to circulate a cooling water between a cooling water passage in a heat generator of a vehicle drive unit and a heater core in the vehicle interior;
a three-way solenoid valve provided between the compressor and the condenser; and
a refrigerant circulation circuit for air heating to circulate a refrigerant through the compressor, the three-way solenoid valve, a heat exchanger means for heating a cooling water, an outside heat exchanger unit including a second inflator means and the accumulator in this order,
the heat exchanger means for heating a cooling water comprising
a heat exchanger for a cooling water provided in a middle of the cooling water circulation circuit for air heating, and
an outside heat exchanger provided in a middle of the refrigerant circulation circuit for air heating to transfer heat with the heat exchanger for a cooling water, and
a control means to selectively execute a normal airconditioning mode and an auxiliary air heating mode by a switching control of the three-way solenoid valve to switch to either of the refrigerant circulation circuits for air cooling and for air heating, the normal air conditioning mode in which the refrigerant is circulated for normal cooling operation in the refrigerant circulation circuit for air cooling, the auxiliary air heating mode in which the refrigerant is circulated for auxiliary air heating operation in the refrigerant circulation circuit for air heating.

2. The air conditioner according to claim 1, further comprising:
a water temperature sensor for detecting a temperature of the cooling water;
an outside air temperature sensor for detecting an outside temperature of the vehicle interior; and
an inside air temperature sensor for detecting an inside temperature of the vehicle interior, wherein
the control means is configured to selectively execute the normal airconditioning mode and the auxiliary air heating mode on the basis of a condition of the cooling water temperature, outside air temperature, and inside air temperature.

3. The air conditioner according to claim 1, further comprising:
an air conditioner switch to start the normal airconditioning mode; and
an auxiliary air heating switch to start the auxiliary air heating mode, wherein
the control means is configured to switch the normal airconditioning mode to the auxiliary air heating mode when the auxiliary air heating switch is turned on in non-air cooling operation.

4. The airconditioner according to claim 2, further comprising:
an air conditioner switch to start the normal airconditioning mode; and
an auxiliary air heating switch to start the auxiliary air heating mode, wherein the control means is configured to
control operation of the compressor to perform a normal air cooling operation when the outside air temperature becomes equal to or over a predetermined air cooling start temperature in a cooling operation of the normal airconditioning mode, and
switch the normal airconditioning mode to the auxiliary air heating mode when the auxiliary air heating switch is turned on in non-air cooling operation and when the outside air temperature is equal to or below a predetermined air heating start temperature and the cooling water temperature becomes equal to or below a predetermined heating start temperature.

5. The air conditioner according to claim 1, wherein
the air conditioner can operate in a refrigerant recovery mode in which a remnant refrigerant in the condenser and the evaporator is recovered in the accumulator, in switching to the auxiliary air heating mode after the cooling operation.

6. The air conditioner according to claim 5, further comprising
a memory in which an airconditioning control state of the vehicle air conditioner is stored at a stop of the vehicle drive unit.
